# EUROPÄISCHE PATENTANMELDUNG

(11) **EP 2 466 242 A1**
(43) Veröffentlichungstag der Anmeldung: **20.06.2012**
(21) Anmeldenummer: 10195838.7
(22) Anmeldetag: 20.12.2010
(51) Int. Cl.: F28D 20/02, A47J 36/28

(54) **Vorrichtung und Verfahren zum Erwärmen einer Speise oder eines Getränks**

(71) Anmelder: Grauer, Felicita, 6045 Meggen (CH)
(72) Erfinder: Die Erfindernennung liegt noch nicht vor
(74) Vertreter: OK pat AG

(57) **Zusammenfassung**

Es geht um eine Lösung in Form einer Vorrichtung (100), die zum Erwärmen einer Speise oder eines Getränks ausgelegt ist. Die Vorrichtung (100) umfasst einen Behälter (10) zum Aufnehmen der Speise oder des Getränks, der mindestens teilweise von einer Ummantelung (20) umgeben ist. Die Ummantelung (20) umfasst ein latent wärmespeicherndes Medium (30) und einen Auslöser (21), der dazu ausgelegt ist durch Betätigung eine Reaktion in dem Medium (30) auszulösen, die zur Abgabe einer Wärmemenge führt. Die Ummantelung (20) ist mit dem Medium (30) so angeordnet, dass die Wärmemenge über eine Wärmebrücke (31) an die Speise oder das Getränk übertragen wird, um diese/dieses zu erwärmen.

## Beschreibung

Die vorliegende Erfindung betrifft eine Vorrichtung, das dazu ausgelegt sind eine Speise oder ein Getränk zu erwärmen sowie ein entsprechendes Verfahren.

Bei Sportveranstaltungen, sonstigen öffentlichen Veranstaltungen und Großereignissen werden oftmals warme Getränke oder Speisen gereicht. Bisher ist es so, dass diese warmen Speisen oder Getränke separat erhitzt werden. Nach dem Erhitzen werden sie in eine Tassen, einen Becher oder ein Glas geschüttet. Erst anschließend wird das Getränk oder die Speise verkauft.

Dieser Vorgang ist umständlich. Er kostet viel Zeit. Insbesondere an Weihnachtsmärkten und bei Großveranstaltungen kann man beobachten, dass sich lange Reihen vor den entsprechenden Ständen bilden.

Es gibt aber auch in anderen Bereichen den Bedarf warme Speisen und Getränke bereit stellen zu können. So gibt es zum Beispiel auf Wanderungen oder bei anderen Aktivitäten den Bedarf sich etwas Warmes zuzuführen. Auch in Notsituationen kann das Bedürfnis bestehen eine warme Speise oder ein warmes Getränk aufzunehmen.

Aufgabe der Erfindung ist es daher eine Lösung bereit zu stellen, die ein einfaches und problemloses Erwärmen eines Getränks oder einer Speise ermöglicht. Das Erwärmen soll vorzugsweise unabhängig von Kochgelegenheiten, Feuerstellen oder Mikrowellenherden möglich sein.

Gemäss Erfindung wird eine Lösung im Form einer Vorrichtung bereit gestellt, die zum einfachen und problemlosen Erwärmen eines Getränks oder einer Speise ausgelegt ist.

Die Vorrichtung umfasst einen Behälter zum Aufnehmen der Speise oder des Getränks. Der Behälter ist mindestens teilweise von einer Ummantelung umgeben, die ein latent wärmespeicherndes Medium und einen Auslöser umfasst, der dazu ausgelegt ist durch Betätigung eine Reaktion in dem Medium auszulösen, die zur Abgabe einer Wärmemenge führt. Die Ummantelung mit dem Medium ist so angeordnet, dass die Wärmemenge über eine Wärmebrücke an die Speise oder das Getränk übertragen wird, um diese/dieses zu erwärmen.

Weitere bevorzugte Ausführungsformen sind den abhängigen Ansprüchen zu entnehmen.

Es geht gemäss Erfindung um einen regenerierbaren Wärmespeicher, der eingesetzt wird, um Speisen und Getränke bei Bedarf schnell und sicher erwärmen zu können.

### Zeichnungen

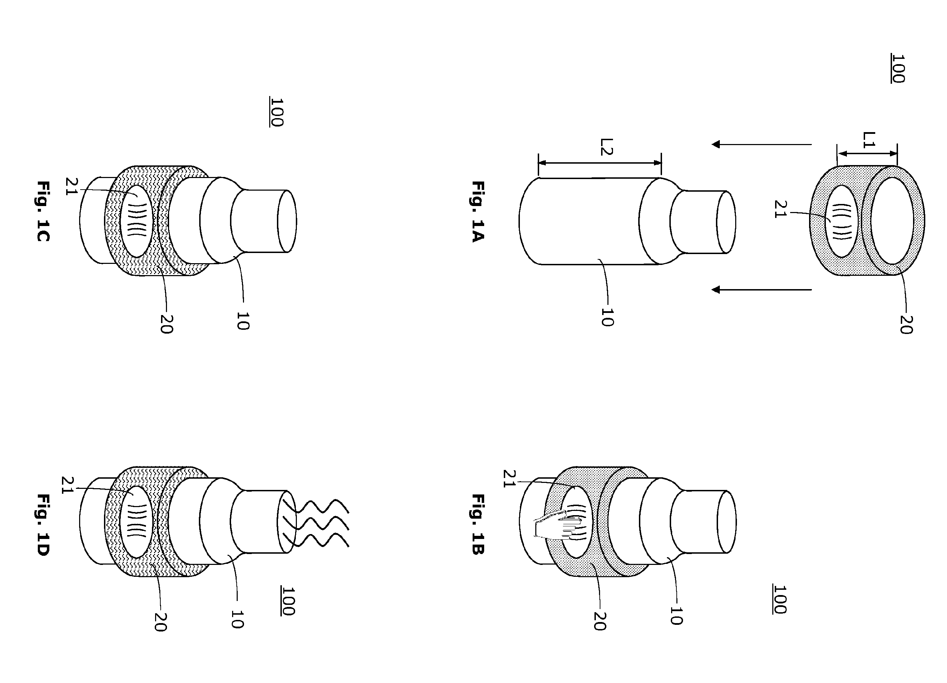

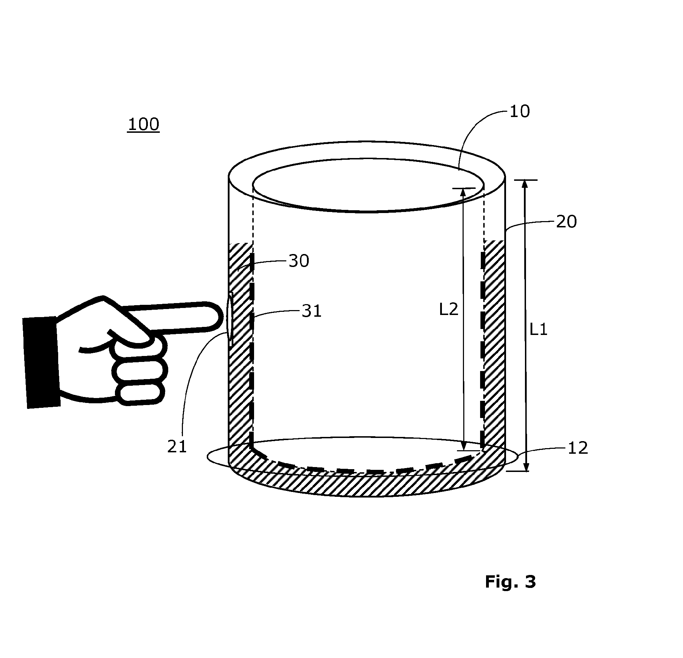

Weitere Details sind den beispielhaften Zeichnungen zu entnehmen:
- Fig. 1A: zeigt eine Vorrichtung mit einem Behälter samt einer separaten Ummantelung, gemäss Erfindung,
- Fig. 1B: zeigt die Vorrichtung nach Fig. 1A nachdem die Ummantelung auf den Behälter geschoben wurde,
- Fig. 1C: zeigt die Vorrichtung nach Fig. 1B, wobei durch das geänderte Muster der Ummantelung schematisch angedeutet ist, dass Wärmeenergie in dem Medium der Ummantelung gespeichert ist,
- Fig. 1D: zeigt die Vorrichtung nach Fig. 1C, nachdem ein Phasenübergang in dem Medium ausgelöst und Wärmeenergie an den Inhalt des Behälters übergeben wurde;
- Fig. 2A: zeigt eine andere Vorrichtung mit einem Behälter samt einer separaten Ummantelung, gemäss Erfindung,
- Fig. 2B: zeigt die Vorrichtung nach Fig. 2A nachdem die Ummantelung auf den Behälter geschoben wurde,
- Fig. 2C: zeigt die Vorrichtung nach Fig. 2B, wobei durch das geänderte Muster der Ummantelung schematisch angedeutet ist, dass Wärmeenergie in dem Medium der Ummantelung gespeichert ist,
- Fig. 2D: zeigt die Vorrichtung nach Fig. 2C, nachdem ein Phasenübergang in dem Medium ausgelöst und Wärmeenergie an den Inhalt des Behälters übergeben wurde;
- Fig. 3: zeigt eine schematische Schnittansicht einer anderen Vorrichtung mit einem Behälter samt einer Ummantelung, gemäss Erfindung,
- Fig. 4: zeigt eine schematische Schnittansicht einer anderen Vorrichtung mit einer Ummantelung und einem Behälter, gemäss Erfindung, bevor der Behälter in die Ummantelung eingebracht wurde;
- Fig. 5A: zeigt eine schematische Perspektivansicht einer anderen Vorrichtung mit einem Behälter samt einer Ummantelung, gemäss Erfindung,
- Fig. 5B: zeigt eine schematische Perspektivansicht der Vorrichtung nach Fig. 5A und eines Heizmittels, gemäss Erfindung,
- Fig. 5C: zeigt eine schematische Perspektivansicht der Vorrichtung nach Fig. 5B, nachdem diese auf das Heizmittel aufgesetzt wurde.
Unter dem Begriff Speisen und Getränke wird im Folgenden insbesondere Folgendes verstanden: Getränke, Suppen, flüssige Speisen, wie z.B. Suppen, teilflüssige Speisen, wie z.B. Eintöpfe, Fleischgericht mit Saucen und dergleichen.
Ein Latentwärmespeicher ist gemäss Erfindung eine Speicher, der thermische Energie verborgen, d.h. latent, verlustarm, mit vielen Wiederholzyklen und über lange Zeit speichern kann. Der Latentwärmespeicher umfasst ein spezielles Medium 30.
Besonders als Medium 30 geeignet ist Natriumacetat-Trihydrat, da es in einem niedrigen Temperaturbereich "arbeitet". Ein solches als Wärmespeicher dienendes Medium 30, das auch "phase change material" (PCM) oder Medium genannt wird, ist in der Lage Energie durch Kristallisations- und Lösungsprozesse umzusetzen.
Eine erste Ausführungsform der Erfindung wird im Folgenden unter Bezugnahme auf Fig. 1A beschrieben. In Fig. 1A ist ein zylinderförmiger Flüssigkeitsbehälter 10 gezeigt, der eine ähnliche Form wie eine Trinkflasche haben kann. Oberhalb des Behälters 10 ist eine separate Ummantelung 20 gezeigt, die hier manschetten- oder ringförmig ausgebildet ist. Die Ummantelung 20 hat hier die Form eines Hohlzylinders, dessen Länge L1 in deutlich kürzer ist als die Länge L2 des zylinderförmigen Bereichs des Behälters 10. Die abwärts gerichteten Pfeile in Fig. 1A deuten an, dass die Ummantelung 20 auf den Behälter 10 aufgesetzt, aufgeschoben oder aufgesteckt werden kann. Es ist auch möglich den Behälter 10 in die Ummantelung 20 einzubringen.
Im Folgenden wird das Zusammenbringen des Behälters 10 und der Ummantelung 20 als Verbinden der beiden Elemente 10, 20 bezeichnet.
An der Ummantelung 20 ist ein Auslöser 21 vorgesehen, der zum Beispiel wie in Druckknopf, Taster oder Betätigungselement ausgeführt ist. Durch eine symbolhaft dargestellte Hand wird angedeutet, dass der Auslöser 21 zum Beispiel manuell betätigt werden kann. Es ist aber auch möglich den Auslöser 21 anders zu bedienen. Z.B. kann die Bedienung automatisch oder semiautomatisch erfolgen.
Vorzugsweise ist der Auslöser 21 so realisiert und in oder an der Vorrichtung 100 angeordnet, dass beim Verbinden von Ummantelung 20 und Behälter 10 die Freisetzung der Wärmemenge ausgelöst wird. Dieser Ansatz lässt sich auf alle Ausführungsformen anwenden.
Vorzugsweise ist der Auslöser 21 so realisiert und in oder an der Vorrichtung 100 angeordnet, dass beim Drehen der Ummantelung 20 relativ zum Behälter 10 die Freisetzung der Wärmemenge ausgelöst wird. Dieser Ansatz lässt sich auf alle Ausführungsformen anwenden.
Die graue Struktur der Ummantelung 20 in den Figuren 1A und 1B soll anzeigen, dass die Ummantelung 20 keine oder nur eine geringe Wärmeenergie speichert. Die geänderte Struktur in den Figuren 1C und 1D hingegen deutet an, dass die Ummantelung 20 Wärmeenergie gespeichert hat. Nach dem manuellen, automatischen oder semiautomatischen Betätigen des Auslösers 21 findet ein chemisch/physikalischer Vorgang im Medium 30 statt, das in der Ummantelung 20 enthalten ist. Dabei wird eine Wärmemenge freigesetzt, die primär nach innen hin an den Behälter 10 und an Speisen oder Getränke im Behälter 10 abgegeben wird. Um die Abgabe der Wärmeenergie möglichst nach Innen zu leiten, ist der Übergang zwischen der Ummantelung 20 und dem Behälter 10 so ausgelegt, dass sich eine Wärmebrücke 31 ergibt.
Im einfachsten Fall wird die Wärmebrücke 31 durch die Wahl eines Materials realisiert, das gut wärmeleitend ist. Dieses Material kommt im Übergang zwischen der Ummantelung 20 und dem Behälter 10 zum Einsatz (siehe z.B. Fig. 3). Dieser Ansatz lässt sich auf alle Ausführungsformen anwenden.
Die Wärmebrücke 31 kann auch durch eine Membrane realisiert sein, die sich im Übergang zwischen dem Behälter 10 und der Ummantelung 20 befindet. Dieser Ansatz lässt sich auf alle Ausführungsformen anwenden.
Besonders bevorzugt sind Ausführungsformen, bei denen durch geeignete Maßnahmen der Wärmeübergang zwischen der Ummantelung 20 und dem Behälter 10 besser ist als der Wärmeübergang von der Ummantelung 20 nach außen. Optimal ist hier die Wahl unterschiedlich wärmeleitender Materialien. Die Wärmebrücke 31 kann durch die Wahl eines ersten Materials realisiert werden, das gut wärmeleitend ist, wohingegen die Außenwand der Ummantelung 20 ein zweites Material umfasst, das weniger gut wärmeleitend ist als das erste Material. Dieser Ansatz lässt sich auf alle Ausführungsformen anwenden.

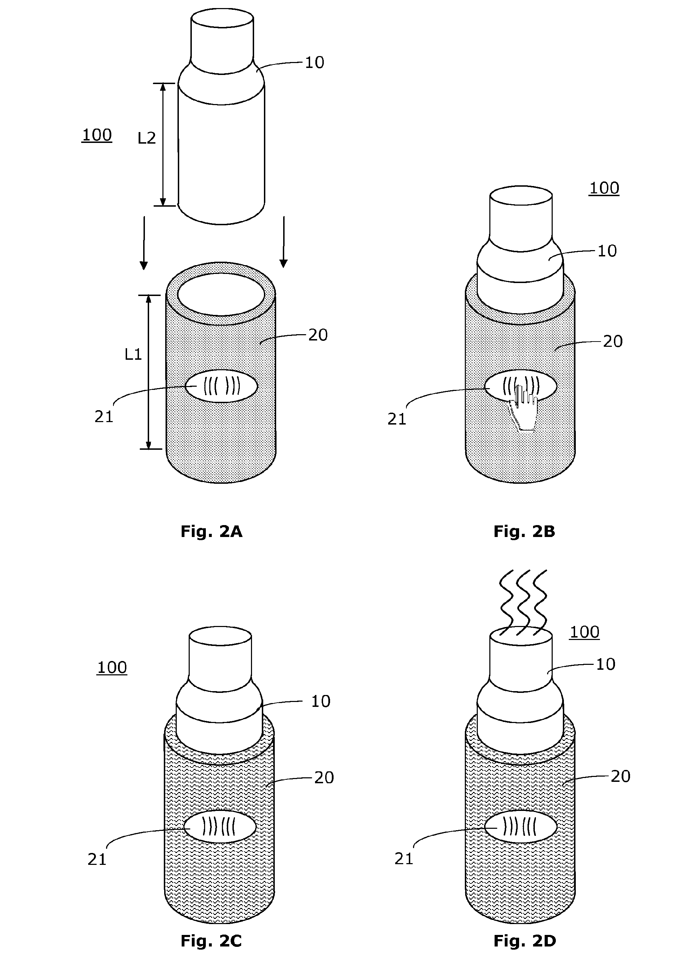

In Fig. 2A ist ein weiterer zylinderförmiger Flüssigkeitsbehälter 10 gezeigt, der eine ähnliche Form wie eine Trinkflasche haben kann. Oberhalb des Behälters 10 ist eine separate Ummantelung 20 gezeigt, die auch hier manschetten-oder ringförmig ausgebildet ist. Die Ummantelung 20 hat hier die Form eines Hohlzylinders, dessen Länge L1 in etwa der Länge L2 des zylinderförmigen Bereichs des Behälters 10 entspricht. Die abwärts gerichteten Pfeile in Fig. 2A deuten an, dass die Ummantelung 20 mit dem Behälter 10 verbunden werden kann. Dieser Ansatz lässt sich auf alle Ausführungsformen anwenden.
Die Beschreibung der Figuren 1B - 1D ist auch auf die Figuren 2B - 2D anzuwenden. Durch die größere Länge L1 der Ummantelung ist auch der Wechselwirkungsbereich, d.h. die Fläche der Wärmebrücke 31 größer. Einerseits hat die Ummantelung 20 nach Fig. 2A - 2D ein größeres Volumen zum Umschließen des Mediums 30, was zur Folge hat, dass eine größere Wärmemenge als in Fig. 1A - 1D gespeichert werden kann. Andererseits ist natürlich auch das Fassungsvermögen des Behälters 10 gemäss Fig. 2A - 2D größer als bei den Behälter nach Fig. 1A - 1D. Wenn entsprechend mehr Speisen oder Getränke in den Behälter 10 gefüllt werden können, braucht die Ummantelung, respektive das Medium 30 in der Ummantelung 20, eine größere Wärmemenge, um die Speisen oder Getränke auf eine gewünschte Temperatur zu bringen.
In Fig. 3 ist ein weiterer zylinderförmiger Flüssigkeitsbehälter 10 gezeigt, der eine ähnliche Form wie ein Becher, eine Tasse oder ein Glas haben kann. Der Behälter 10 ist einer Ummantelung 20 umgeben, die hier in einer Schnittdarstellung gezeigt ist. Die Ummantelung 20 ist auch hier manschetten- oder ringförmig ausgebildet. Die Ummantelung 20 hat hier die Form eines Hohlzylinders, dessen Länge L1 in etwa der Länge L2 des zylinderförmigen Bereichs des Behälters 10 entspricht. Die Ummantelung 20 kann entweder fest mit dem Behälter 10 verbunden sein, oder sie ist separat vom Behälter 10 ausgeführt, wie in den Figuren 1A - 2D beispielhaft dargestellt. Besonders bevorzugt ist eine Ausführungsform, bei der die Ummantelung 20 und der Behälter 10 eine Einheit bilden. In diesem Fall kann die bereits Wärmebrücke 31 besonders optimal ausgestaltet werden. Dieser Ansatz lässt sich auf alle Ausführungsformen anwenden.
Die Wärmebrücke 31 ist in Fig. 3 durch eine dicke, strichlierte Linie angedeutet. Die Wärmebrücke 31 kann je nach Ausführungsform einen Teil der Zylinderwand zwischen Behälter 10 und Ummantelung 20 einnehmen. Sie kann auch, wie in Fig. 3 gezeigt, im Bodenbereich 12 liegen. Dieser Ansatz lässt sich auf alle Ausführungsformen anwenden.
Seitlich an der Vorrichtung ist hier ein Auslöser 21 angebracht, der, wie durch die symbolhaft gezeigte Hand eingedeutet, von außen betätigt werden kann. Dieser Ansatz lässt sich auf alle Ausführungsformen anwenden.
Je nach Bedarf und Situation kann der Auslöser 21 aber auch an einem anderen Ort des Ummantelung 20 und/oder des Behälters 10 angeordnet sein. Die Position des Auslösers 21 ist für die Funktion der erfindungsgemäßen Vorrichtung unerheblich, solange gewährleistet ist, dass durch das Betätigen des Auslösers 21 eine Reaktion im Medium 30 ausgelöst wird, die das Abgeben einer im Medium 30 gespeicherten Wärmemenge ermöglicht.
Vorzugsweise hat die Ummantelung 20 ein Fassungsvolumen V1, das größer ist als das Maximalvolumen Vmax des Mediums 30. In Fig. 3 ist dieses Prinzip zu erkennen. Das Medium 30, das hier schraffiert dargestellt ist, füllt nicht das gesamte Volumen V1, d.h. es gilt hier: Vmax < V1. Die Einhaltung dieses Prinzips ist wichtig, falls weder der Übergang zwischen Ummantelung 20 und Behälter 10 noch die Außenwand der Ummantelung 20 dehnbar ausgeführt sind. Bei nicht dehnbaren oder nicht volumenanpassenden Vorrichtungen muss ausreichend Volumen vorhanden sein, um das sich ändernde Volumen des Mediums 30 aufnehmen zu können.
Bei einer dehnbaren oder volumenanpassenden Vorrichtung kann das Maximalvolumen Vmax des Mediums 30 in etwa dem maximalen Fassungsvolumen V1 entsprechen.

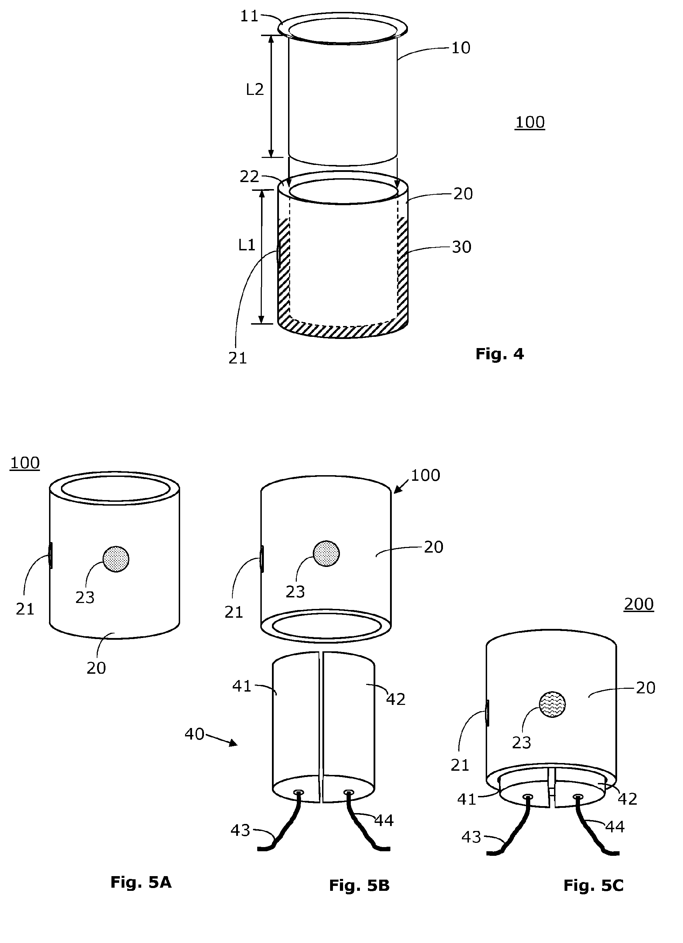

In Fig. 4 ist ein weiterer zylinderförmiger Flüssigkeitsbehälter 10 gezeigt, der eine ähnliche Form wie ein Becher, eine Tasse oder ein Glas haben kann. Der Behälter 10 kann mit einer Ummantelung 20 verbunden werden, die hier in einer Schnittdarstellung gezeigt ist. Die Ummantelung 20 ist auch hier manschetten- oder ringförmig ausgebildet. Die Ummantelung 20 hat die Form eines Hohlzylinders, dessen Länge L1 in etwa der Länge L2 des zylinderförmigen Bereichs des Behälters 10 entspricht. Die Ummantelung 20 ist hier separat vom Behälter 10 ausgeführt. Der Behälter ist vorzugsweise aus einem dünnen und gut wärmeleitenden Material (z.B. Metall) gefertigt. Er hat vorzugsweise einen umlaufenden Kragen 11, wie in Fig. 4 zu erkennen. Die Form des Kragens 11 ist bei einer bevorzugten Ausführungsform so ausgeführt, dass nach dem Verbinden von Behälter 10 und Ummantelung 20 der Kragen 11 an einer entsprechenden gestalteten Ringfläche 22 anliegt.
Bei einer bevorzugten Ausführungsform hat der Behälter 10 gemäss Fig. 4 eine Konstitution, die in sich eine Stabilität bieten, um bei der Handhabung nicht zu zerbrechen. Die eigentliche Stabilität für den täglichen Gebrauch bekommt der Behälter 10 erst durch das Verbinden mit der Ummantelung 20.
In den Figuren 5A - 5C ist eine bevorzugte Ausführungsform gezeigt, die hier ein Heizelement 40 umfasst, auf das eine der bisher beschriebenen Vorrichtungen aufgesetzt werden kann. Zum Zuführen von Wärmeenergie wird die Vorrichtung 100 auf den Kopf gedreht, wie in Fig. 5B gezeigt, und auf das Heizelement 40 gesetzt. Das Heizelement 40 kann zum Beispiel zwei Segmente 41, 42 umfassen, wie in Fig. 5B zu erkennen ist. Nach dem Aufsetzen der Vorrichtung 100 können die beiden Segmente 41, 42 leicht auseinander bewegt werden, wie in Fig. 5C gezeigt. Der Doppelpfeil P deutet diese Auseinanderbewegung an. Das Heizelement 40 kann z.B. elektrisch über zwei Anschlüsse 43, 44 beheizt werden. Statt einer elektrischen Beheizung kann das Heizelement 40 zum Beispiel auch von einem heißen Fluid (Gas oder Flüssigkeit) durchströmt werden. Die beiden Anschlüsse 43, 44 sind in diesem Fall als Rohr- oder Schlauchleitungen ausgeführt.
Gemäss einer Ausführungsform der Erfindung wird die Vorrichtung 100 als Ganzes (d.h. Ummantelung 20 zusammen mit dem Behälter 10) oder die Ummantelung 20 alleine in ein heißes Fluid (z.B. Wasser) gegeben, bis das ursprünglich feste Medium 30 vollständig verflüssigt wurde. Das in der Ummantelung 20 z.B. enthaltene Natriumacetat-Trihydrat ist dann geschmolzen und kann abkühlen, ohne dabei auszufällen. In oder an der Ummantelung 20 befindet sich, wie beschrieben, ein Auslöser 21, der betätigt werden muss (z.B. ein Metallplättchen, das man manuell klicken kann), um die Kristallisation oder Phasenumwandlung des Mediums 30 zu starten. Diese Kristallisation oder Phasenumwandlung ist bereits nach wenigen Sekunden abgeschlossen. Die Ummantelung 20 erwärmt sich auf ca. 58°C (falls Natriumacetat-Trihydrat als Medium 30 zum Einsatz kommt). Dann entsteht ein Gleichgewicht zwischen der festen Phase und der noch übrigen Lösung des Mediums 30. Auf diese Weise bleibt die Ummantelung 20 noch eine längere Zeit warm, bis das Medium 30 vollständig kristallisiert ist.
Gemäss einer weiteren Ausführungsform der Erfindung wird der Behälter 10 der Vorrichtung 100 mit einem heißen Fluid (z.B. Wasser, eine Speise oder einem Getränk) befüllt, bis das ursprünglich feste Medium 30 vollständig verflüssigt ist. D.h. vorzugsweise erfolgt der erforderliche Wärmeeintrag durch das Einbringen der Speise oder des Getränks in den Behälter 10 der Vorrichtung 100. Somit ist es z.B. denkbar eine Vorrichtung 100 am Morgen mit einem heißen Getränk oder einer heißen Speise zu befüllen. Die Wärmemenge dieses Getränks oder der Speise wird an das Medium 30 in der Ummantelung 20 transferiert und im sich verflüssigenden Medium 30 gespeichert. Bei Bedarf kann jederzeit der Auslöser 21 betätig werden, um das Abgeben der gespeicherten Wärmemenge auszulösen.
Es ist ein Vorzug der Erfindung, dass jederzeit und an jedem Ort die Abgabe der Wärmemenge ausgelöst werden kann. Ein weiterer Vorteil der Erfindung liegt darin, dass durch die Vorgabe eines geeigneten Mediums 30 eine "Arbeitstemperatur" vorgegeben werden kann, die erwünscht ist. So kann man z.B. die Arbeitstemperatur so vorgeben, dass sie zu der Speise oder dem Getränk passt, oder sie kann so gewählt werden, dass man sich beim Trinken oder Essen nicht verbrennt.
Eine besonders bevorzugte Ausführungsform zeichnet sich dadurch aus, dass nach innen hin eine Wärmebrücke 31 zwischen der Ummantelung 20 und dem Behälter 10 wirkt, während nach außen hin eine Wärmeisolation zum Einsatz kommt. So wird erreicht, dass ein Grossteil der gespeicherten Wärmemenge nach innen an die Speise oder das Getränk abgegeben wird, während die Außenhaut oder die äußerste Schicht der Ummantelung 20 maximal handwarm wird, um Verbrennungen zu vermeiden.
Natriumacetat ist besonders gut als Medium 30 zur Verwendung im Lebensmittelbereich geeignet, da Natriumacetat kein gesundheitsschädlicher Stoff ist. Natriumacetat ist zudem gut wasserlöslich und kann bedenkenlos weggespült werden.
Glaubersalz als Dekahydrat mit der Zusammensetzung Na2SO4 ● 10 H2O kann als Medium 30 für eine Arbeitstemperatur um 32 °C eingesetzt werden. Natriumacetat kann als Medium 30 für eine Arbeitstemperatur um 58 Grad eingesetzt werden. Lithiumnitrat kann als Medium 30 für eine Arbeitstemperatur zwischen 70 und 80 °C eingesetzt werden.
Vorzugsweise kommt bei allen Ausführungsformen ein Medium 30 zum Einsatz, bei dem es sich um ein Phasenwechselmaterial handelt.
Der Auslöser 21 ist vorzugsweise bei allen Ausführungsformen so ausgelegt, dass er eine Phasenumwandlung des Mediums 30 auslösen kann, wobei vorzugsweise ein Übergang von einem flüssigen Zustand des Mediums 30 zu einem festen Zustand erfolgt.
Ganz besonders bevorzugt sind Auslöser 21, die durch eine mechanische Bewegung einen Impuls, vorzugsweise in Form einer Druckwelle, an das Medium 30 abgeben, der in dem Medium 30 eine Kristallisation auslöst. Ein solcher Auslöser lässt sich auf alle Ausführungsformen anwenden.
Das Medium 30 ist vorzugsweise in der Ummantelung 20 im flüssigem Zustand gespeichert, wenn Wärmeenergie im Medium 30 aufgenommen wurde.
Der Behälter 10 kann optional bei allen Ausführungsformen einen Deckel oder Schraubverschluss aufweisen.
Vorzugsweise ist die Ummantelung 20 bei allen Ausführungsformen so auslegt (dimensioniert), dass sie einen standardisierten Behälter 10 (z.B. eine PET-Flasche) aufnehmen kann.
Ganz besonders bevorzugt sind Ausführungsformen der Vorrichtung 100, bei der ein optisches Anzeigemittel 23 (zum Beispiel an der Ummantelung 20), den Zustand des Mediums 30 anzeigt oder sichtbar macht. Das Prinzip ist in den Figuren 5A - 5C angedeutet. Die Vorrichtung 100 umfasst hier ein rundes Sichtfenster, das als optisches Anzeigemittel 23 dient. Da das Medium 30 die Farbe ändert, kann man durch das Fenster hindurch erkennen, ob Energie in dem Medium 30 gespeichert ist oder nicht. In de Figuren 5A, 5B ist ein Zustand gezeigt, nachdem Wärmeenergie vom Medium 30 abgegeben wurde. D.h. das Medium 30 ist nicht energiegeladen. In Fig. 5C hingegen ist das Medium im energiegeladenen Zustand gezeigt, was anhand des Musters im Fenster zu erkennen ist (analog zu den Figuren 1C, 1D). Ein solches optisches Anzeigemittel 23 lässt sich auf alle Ausführungsformen anwenden.
Ganz besonders bevorzugt sind Ausführungsformen der Vorrichtung 100, bei der ein optisches Anzeigemittel 23 eingesetzt wird, das durch eine Farbanzeige anzeigt, ob das Medium 30 energiegeladen oder nicht energiegeladen ist. Ein solches optisches Anzeigemittel 23 lässt sich auf alle Ausführungsformen anwenden.
Das erfindungsgemäße Verfahren zum Bereitstellen einer Speise oder eines Getränks läuft vorzugsweise wie folgt ab. Es kommt eine Vorrichtung 100 zum Einsatz, die einen Behälter 10 zum Aufnehmen der Speise oder des Getränks umfasst, der mindestens teilweise von einer Ummantelung 20 umgeben ist, die ein latent wärmespeicherndes Medium 30 und einen Auslöser 21 umfasst. In einem Schritt wird die Speise oder das Getränk in den Behälter 10 eingebracht. Es wird eine Wärmemenge zugeführt, um das Medium 30 in der Ummantelung 20 in einen wärmespeichernden Zustand zu überführen. Nach dem Betätigen des Auslösers 21 wird die Wärmeabgabe des Mediums 30 ausgelöst, wobei die Speise oder das Getränk im Behälter 10 erwärmt wird. Entweder erfolgt das Einbringen der Wärmemenge indem die Speise oder das Getränk in erwärmtem Zustand in den Behälter 10 eingebracht wird, oder das Einbringen der Wärmemenge erfolgt indem die Ummantelung 20 in einem Wärmebad (z.B. in einem heißen Fluid) erwärmt wird. Statt eines Wärmebads kann auch ein Heizelement 40 (z.B. gemäss Fig. 5B und 5C) eingesetzt werden, um Wärmemenge in das Medium 30 einzubringen.

## Patentansprüche

1. Vorrichtung (100) zum Erwärmen einer Speise oder eines Getränks, wobei die Vorrichtung (100) einen Behälter (10) zum Aufnehmen der Speise oder des Getränks umfasst, der mindestens teilweise von einer Ummantelung (20) umgeben ist, **dadurch gekennzeichnet, dass** die Ummantelung (20) ein latent wärmespeicherndes Medium (30) und einen Auslöser (21) umfasst, der dazu ausgelegt ist durch Betätigung eine Reaktion in dem Medium (30) auszulösen, die zur Abgabe einer Wärmemenge führt, und **dadurch gekennzeichnet, dass** die Ummantelung (20) mit dem Medium (30) so angeordnet ist, dass die Wärmemenge über eine Wärmebrücke (31) an die Speise oder das Getränk übertragen wird, um diese/dieses zu erwärmen.

2. Vorrichtung (100) nach Anspruch 1, **dadurch gekennzeichnet, dass** es sich bei dem Medium (30) um ein Phasenwechselmaterial handelt.

3. Vorrichtung (100) nach Anspruch 1 oder 2, **dadurch gekennzeichnet, dass** der Auslöser (21) eine Phasenumwandlung des Mediums (30) auslöst, wobei vorzugsweise ein Übergang von einem flüssigen Zustand zu einem festen Zustand erfolgt.

4. Vorrichtung (100) nach Anspruch 1, 2 oder 3, **dadurch gekennzeichnet, dass** der Auslöser (21) durch eine mechanische Bewegung einen Impuls, vorzugsweise in Form einer Druckwelle, an das Medium (30) abgibt, der in dem Medium (30) eine Kristallisation auslöst.

5. Vorrichtung (100) nach Anspruch 1, 2 oder 3, **dadurch gekennzeichnet, dass** das Medium (30) in der Ummantelung (20) in flüssigem Zustand gespeichert ist.

6. Vorrichtung (100) nach einem der vorhergehenden Ansprüche, **dadurch gekennzeichnet, dass** die Ummantelung (20) ein Fassungsvolumen hat, das grösser ist als das Maximalvolumen des Mediums (30).

7. Vorrichtung (100) nach einem der vorhergehenden Ansprüche, **dadurch gekennzeichnet, dass** die Ummantelung (20) fest mit dem Behälter (10) verbunden ist.

8. Vorrichtung (100) nach einem der vorhergehenden Ansprüche 1 bis 6, **dadurch gekennzeichnet, dass** die Ummantelung (20) mit dem Behälter (10) verbindbar und von dem Behälter (10) trennbar ist.

9. Vorrichtung (100) nach einem der vorhergehenden Ansprüche, **dadurch gekennzeichnet, dass** eine Metallschicht oder eine dünne Trennwand zwischen dem Behälter (10) und der Ummantelung (20) als Wärmebrücke dient.

10. Vorrichtung (100) nach einem der vorhergehenden Ansprüche, **dadurch gekennzeichnet, dass** die Ummantelung (20) eine Außenwand aufweist, die einen niedrigeren Wärmeleitwert aufweist als die Wärmebrücke zwischen dem Behälter (10) und der Ummantelung (20).

11. Vorrichtung (100) nach einem der vorhergehenden Ansprüche, **dadurch gekennzeichnet, dass** sie ein optisches Anzeigemittel (23) umfasst, um den Zustand des Mediums (30) anzeigen oder sichtbar machen zu können.

12. Verfahren zum Bereitstellen einer Speise oder eines Getränks, wobei eine Vorrichtung (100) zum Einsatz kommt, die einen Behälter (10) zum Aufnehmen der Speise oder des Getränks umfasst, der mindestens teilweise von einer Ummantelung (20) umgeben ist, die ein latent wärmespeicherndes Medium (30) und einen Auslöser (21) umfasst, **gekennzeichnet durch** die folgenden Schritte:
- Einbringen der Speise oder des Getränks in den Behälter (10),
- Einbringen einer Wärmemenge, um das Medium (30) in der Ummantelung (20) in einen wärmespeichernden Zustand zu überführen,
- Betätigen des Auslösers (21), um eine Wärmeabgabe des Mediums (30) auszulösen, wobei die Speise oder das Getränk im Behälter (10) erwärmt wird.

13. Verfahren nach Anspruch 12, **dadurch gekennzeichnet, dass** es sich bei dem Medium (30) um ein Phasenwechselmaterial handelt.

14. Verfahren nach Anspruch 12 oder 13, **dadurch gekennzeichnet, dass** zwischen dem Behälter (10) und der Ummantelung (20) eine Wärmebrücke besteht.

15. Verfahren nach Anspruch 12, 13 oder 14, **dadurch gekennzeichnet, dass** das Einbringen der Wärmemenge erfolgt indem die Speise oder das Getränk in erwärmtem Zustand in den Behälter (10) eingebracht wird.

16. Verfahren nach Anspruch 12, 13 oder 14, **dadurch gekennzeichnet, dass** das Einbringen der Wärmemenge erfolgt indem die Ummantelung (20) in einem Wärmebad erwärmt wird.

17. Gesamtvorrichtung (200) mit einer Vorrichtung (100) nach einem der vorhergehenden Ansprüche 1 bis 11, **dadurch gekennzeichnet, dass** die Gesamtvorrichtung (200) zusätzlich zu der Vorrichtung (100) ein Heizelement (40) umfasst, auf das die Vorrichtung (100) aufgesetzt werden kann.
